# EUROPÄISCHE PATENTSCHRIFT

(11) **EP 3 446 369 B1**
(45) Veröffentlichungstag und Bekanntmachung des Hinweises auf die Patenterteilung: **10.08.2022**
(21) Anmeldenummer: 17717353.1
(22) Anmeldetag: 06.04.2017
(51) Int. Cl.: H01R 13/11, H01R 13/424, H01R 13/44, H01R 4/56

(54) **LEISTUNGSKONTAKT MIT AUSWECHSELBAREM KONTAKTBEREICH**
CONNECTOR WITH INTERCHANGEABLE CONTACT
CONNECTEUR AVEC CONTACT REMPLAÇABLE

(30) Priorität: 22.04.2016 DE 102016206914
(43) Veröffentlichungstag der Anmeldung: 27.02.2019
(73) Patentinhaber: Phoenix Contact e-Mobility GmbH, 32816 Schieder-Schwalenberg (DE)
(72) Erfinder: WENZ, Martin, 31812 Bad Pyrmont (DE)
(74) Vertreter: Richly & Ritschel Patentanwälte PartG mbB
(86) Internationale Anmeldenummer: PCT/EP2017/058209
(87) Internationale Veröffentlichungsnummer: WO 2017/182283

(56) Entgegenhaltungen:
- EP-A1- 0 574 293
- EP-A2- 1 130 697
- US-A- 2 917 722
- US-A1- 2009 090 517

## Beschreibung

Die vorliegende Erfindung betrifft einen Leistungskontakt für einen Ladestecker und/oder für eine Ladebuchse. Ferner betrifft die vorliegende Erfindung einen Ladestecker zur Kopplung mit einer korrespondierenden Verbindungsvorrichtung und zur Übertragung elektrischer Energie.

Aus dem Stand der Technik sind Ladestecker für elektrisch antreibbare Fahrzeuge bekannt, die zur Verbindung mit einer korrespondierenden, als Buchse ausgebildeten, Verbindungsvorrichtung ausgebildet sind. Diesbezüglich wird auf den in der DE 10 2012 105 774 B3 offenbarten Ladestecker verwiesen. In dem Ladestecker sind Leistungskontakte angeordnet, die jeweils einen ersten Anschlussbereich und einen zweiten Anschlussbereich aufweisen. Der erste Anschlussbereich ist als Kontaktbuchse ausgebildet und zur galvanischen Verbindung mit einem Kontaktstift geeignet, wobei der Kontaktstift mit einem elektrischen Energieempfänger, beispielsweise einem Akkumulator eines Fahrzeuges galvanisch verbundenen ist. Es gibt jedoch auch eine mögliche Konstellation, in der eine Kontaktbuchse mit dem Akkumulator verbunden ist, wobei in diesem Fall der erste Anschlussbereich dann als Kontaktstift ausgebildet ist. Der zweite Anschlussbereich des Leistungskontakts ist zur galvanischen Verbindung mit einer elektrischen Energiequelle, beispielsweise eine Ladestation oder im Allgemeinen mit einem elektrischen Versorgungsnetz ausgebildet. Zu diesem Zweck ist der zweite Anschlussbereich mit einer Ladeleitung fest verbunden.

Der Ladestecker ist mit einer Ladestation elektrisch gekoppelt, die beispielsweise öffentlich zugänglich sein kann, so dass mittels der Ladestation eine Vielzahl elektrisch antreibbaren Fahrzeugen nacheinander aufgeladen werden können. Die Leistungskontakte des Ladesteckers sind aufgrund der häufigen Ladevorgänge und den dafür notwendigen Kopplungen und Trennungen mit fahrzeugseitigen Ladebuchsen oder Ladestiften einer großen Belastung und folglich einem großen Verschleiß unterworfen.

US 2 917 722 A offenbart ein Leitungskontakt nach der Oberbegriff des Anspruchs 1. Weitere Leitungskontakte sind aus EP 0 574 293 A1, US 2009/090517 A1 und EP 1 130 697 A2 bekannt.

Der vorliegenden Erfindung liegt die Aufgabe zugrunde, einen verbesserten Leistungskontakt für einen Ladestecker und/oder für eine Ladebuchse und einen verbesserten Ladestecker bereitzustellen, die der oben geschilderten Problematik Rechnung tragen.

Die der vorliegenden Erfindung zugrundeliegende Aufgabe wird durch einen Leistungskontakt mit den Merkmalen des Anspruchs 1 gelöst. Vorteilhafte Ausgestaltungen des Leistungskontakts sind in den von Anspruch 1 abhängigen Ansprüchen beschrieben. Ferner wird die der vorliegenden Aufgabe zugrundeliegende Aufgabe durch einen Ladestecker mit den Merkmalen des Anspruchs 8 gelöst. Im Genaueren wird die der vorliegenden Erfindung zugrundeliegende Aufgabe durch einen Leistungskontakt für einen Ladestecker und/oder für eine Ladebuchse gelöst, der einen ersten Anschlussbereich zur galvanischen Verbindung mit einem elektrischen Energieempfänger oder Energiesender und einem zweiten Anschlussbereich zur galvanischen Verbindung mit einer Ladeleitung aufweist. Der erfindungsgemäße Leistungskontakt ist dadurch gekennzeichnet, dass der Leistungskontakt zumindest zweiteilig ausgebildet ist und ein Basisbauteil und mit dem Basisbauteil verbindbares Kontaktierungsbauteil aufweist, wobei das Kontaktierungsbauteil von dem Basisbauteil lösbar ausgebildet ist, so dass das Kontaktierungsbauteil des Leistungskontakts austauschbar ist. Dabei ist der erste Anschlussbereich in dem Kontaktierungsbauteil angeordnet, und der zweite Anschlussbereich ist in dem Basisbauteil angeordnet. Bei Verbindung des Kontaktierungsbauteils mit dem Basisbauteil stehen der erste Anschlussbereich und der zweite Anschlussbereich in galvanischem Kontakt.

Bei aus dem Stand der Technik bekannten Leistungskontakten und Ladesteckern, in denen diese Leistungskontakte verbaut sind, muss zum Austausch der Leistungskontakte der Ladestecker zumindest teilweise demontiert werden, wobei die verschlissenen Leistungskontakte von den Ladeleitungen zu trennen sind und die neuen Leistungskontakte mit den Ladeleitungen elektrisch verbunden werden müssen. Diese Prozedur ist zeit- und kostenintensiv. Der erfindungsgemäße Leistungskontakt bietet den Vorteil, dass bei nutzungsbedingtem Verschleiß des Leistungskontakts nicht der gesamte Leistungskontakt ausgetauscht werden muss. Mittels des erfindungsgemäßen Leistungskontakts muss lediglich das Kontaktierungsbauteil von dem Basisbauteil getrennt bzw. gelöst werden und durch ein neues Kontaktierungsbauteil ersetzt werden, das mit dem im Ladestecker verbleibenden Basisbauteil verbunden wird. Folglich reduziert sich die zum Austausch eines verschlissenen Leistungskontakts notwendige Zeit durch den erfindungsgemäßen Leistungskontakt erheblich. Ferner reduzieren sich durch den erfindungsgemäßen Leistungskontakt die Wartungskosten für einen mit dem Leistungskontakt ausgestatteten Ladestecker oder eine mit dem Leistungskontakt ausgestatteten Ladebuchse.

Das Basisbauteil kann auch als Basiselement bezeichnet werden. Das Kontaktierungsbauteil kann auch als Kontaktierungselement bezeichnet werden.

Der erste Anschlussbereich des Leistungskontakts weist eine erste Kontaktfläche und der zweite Anschlussbereich des Leistungskontakts weist eine zweite Kontaktfläche auf. Das Kontaktierungsbauteil definiert den ersten Anschlussbereich des Leistungskontaktes, und das Basisbauteil definiert den zweiten Anschlussbereich des Leistungskontaktes.

Das Basisbauteil ist dazu vorgesehen, in einem Ladestecker eingebaut und mit einer Ladeleitung galvanisch verbunden zu werden. Ein Lösen bzw. Trennen des Kontaktierungsbauteils von dem Basisbauteil bedeutet ein galvanisches Trennen des Kontaktierungsbauteils von dem Basisbauteil.

Erfindungsweise ist der Leistungskontakt derart ausgebildet, dass das Kontaktierungsbauteil eine erste Verbindungseinrichtung und das Basisbauteil eine zweite Verbindungseinrichtung aufweisen, so dass das Kontaktierungsbauteil mit dem Basisbauteil mittels der ersten Verbindungseinrichtung und mittels der zweiten Verbindungeinrichtung verbindbar ist.

Die erste Verbindungseinrichtung kann beispielsweise als ein Au-βengewinde an dem Kontaktierungsbauteil und die zweite Verbindungseinrichtung kann beispielsweise als ein Innengewinde in dem Basisbauteil ausgebildet sein. Ferner ist es auch möglich, dass das Kontaktierungsbauteil mit dem Basisbauteil mittels einer Bajonettverbindung verbunden wird. Beschränkungen hinsichtlich der ersten Verbindungseinrichtung und der zweiten Verbindungseinrichtung bestehen daher nicht.

Der Leistungskontakt ist weiter erfindungsweise derart ausgebildet, dass die erste Verbindungseinrichtung als Schraube oder als Gewindestift und die zweite Verbindungseinrichtung als eine ein Innengewinde aufweisende Gewindehülse ausgebildet sind, wobei die Schraube oder der Gewindestift in die Gewindehülse einschraubbar ist.

Ein entsprechend ausgebildeter Leistungskontakt ist hinsichtlich seines Aufbaus besonders einfach. Ferner wird mittels entsprechend ausgebildeter Verbindungseinrichtungen eine zuverlässige Verbindung des Kontaktierungsbauteils mit dem Basisbauteil erreicht, denn das Kontaktierungsbauteil verbleibt auch bei starker mechanischer Beanspruchung aufgrund einer entsprechenden Ausbildung der Verbindungseinrichtungen zuverlässig an dem Basisbauteil. Ferner ist ein Lösen des Kontaktierungsbauteils von dem Basisbauteil bei einer entsprechenden Ausbildung der ersten Verbindungseinrichtung und der zweiten Verbindungseinrichtung besonders einfach möglich.

Die Schraube ist selbstverständlich in die Gewindehülse ein drehbar, sodass dann das Kontaktierungsbauteil mit dem Basisbauteil verbunden ist. Die Schraube kann vorzugsweise verliersicher mit dem Kontaktierungsbauteil verbunden sein.

Gemäß einer weiteren vorteilhaften Ausgestaltung ist der Leistungskontakt derart ausgebildet, dass die Schraube oder der Gewindestift innerhalb eines Aufnahmeraums des Kontaktierungsbauteils angeordnet ist und durch eine Durchgangsöffnung des Kontaktierungsbauteils hindurchragt.

Ein Schraubenkopf der Schraube ist dann innerhalb des Aufnahmeraums angeordnet und hintergreift eine Wandung, in der die Durchgangsöffnung des Kontaktierungsbauteils eingebracht ist. Bei Verbindung des Kontaktierungsbauteils mit dem Basisbauteil verlaufen die Längsachsen des Basisbauteils und des Kontaktierungsbauteils vorzugsweise kollinear zueinander.

Weiter vorzugsweise ist der Leistungskontakt derart ausgebildet, dass das Kontaktierungsbauteil als Kontaktbuchse ausgebildet ist.

Gemäß einer weiteren vorteilhaften Ausgestaltung weist der Leistungskontakt eine Isolationshülse auf, die wiederum eine stirnseitige Durchgangsöffnung aufweist, die mit dem Kontaktierungsbauteil verbindbar ist, wobei bei Verbindung der Isolationshülse mit dem Kontaktierungsbauteil das Kontaktierungsbauteil von der Isolationshülse umschlossen und über die Durchgangsöffnung der Isolationshülse zugänglich ist.

Die Isolationshülse besteht dabei aus einem dielektrischen Material, also aus einem elektrisch isolierenden Material. Ein entsprechend ausgebildeter Leistungskontakt bietet den Vorteil, dass bei einem Austausch des Kontaktierungsbauteils der erste Anschlussbereich des Leistungskontakts nicht angefasst werden muss, sodass keine oder eine verminderte Kontaktkorrosion vorliegt.

Vorzugsweise ist der Leistungskontakt derart ausgebildet, dass der Leistungskontakt eine zumindest teilweise umlaufende Nut oder eine zumindest teilweise umlaufende Erhebung und die Isolationshülse eine zumindest teilweise umlaufende Rastkontur aufweisen, so dass die Isolationshülse durch Eingreifen der Rastkontur in die Nut oder Eingreifen in die Erhebung oder Hintergreifen der Erhebung mit dem Kontaktierungsbauteil verbindbar ist. Die Rastkontur kann auch als Rastfeder bezeichnet werden.

Der entsprechend ausgebildete Leistungskontakt bietet den Vorteil, dass die Verbindung der Isolationshülse mit dem Kontaktierungsbauteil besonders einfach möglich ist. Ferner ist es möglich, bei Austausch eines Kontaktierungsbauteils die Isolationshülse von dem verschlissenen Kontaktierungsbauteil zu lösen und mit einem neuen Kontaktierungsbauteil zu verbinden, welches das alte Kontaktierungsbauteil ersetzt.

Alternativ zu dieser Art der Befestigung der Isolationshülse an dem Kontaktierungsbauteil ist es auch möglich, dass die Isolationshülse ein endseitig angeordnetes Innengewinde und das Kontaktierungsbauteil ein entsprechendes ebenfalls endseitig angeordnetes Außengewinde aufweist, sodass die Isolationshülse auf das Kontaktierungsbauteil aufschraubbar ist.

Gemäß einer weiteren vorteilhaften Ausgestaltung des Leistungskontaktes weisen das Basisbauteil eine stirnseitige Vertiefung und das Kontaktierungsbauteil einen in die Vertiefung einführbaren Vorsprung auf, wobei bei Verbindung des Kontaktierungsbauteils mit dem Basisbauteil das Kontaktierungsbauteil mit dem Basisbauteil formschlüssig verbunden ist, indem der Vorsprung innerhalb der Vertiefung angeordnet ist.

Gemäß einer weiteren vorteilhaften Ausgestaltung des Leistungskontaktes weisen das Kontaktierungsbauteil eine stirnseitige Vertiefung und das Basisbauteil einen in die Vertiefung einführbaren Vorsprung auf, wobei bei Verbindung des Kontaktierungsbauteils mit dem Basisbauteil das Kontaktierungsbauteil mit dem Basisbauteil formschlüssig verbunden ist, indem der Vorsprung innerhalb der Vertiefung angeordnet ist.

Bei einem entsprechend ausgebildeten Leistungskontakt ist die Verbindung zwischen dem Kontaktierungsbauteil und dem Basisbauteil nochmals verstärkt ausgebildet. Ferner wird durch eine entsprechende Ausbildung des Leistungskontakts ein zuverlässiger galvanischer Kontakt des Kontaktierungsbauteils mit dem Basisbauteil gewährleistet. Weiterhin wird eine Kontaktfläche zwischen dem Kontaktierungsbauteil und dem Basisbauteil vergrößert.

Die der vorliegenden Erfindung zugrundeliegende Aufgabe wird ferner durch einen Ladestecker zur Kopplung mit einer korrespondierenden Verbindungsvorrichtung und zur Übertragung elektrischer Energie gelöst, wobei der Ladestecker dadurch gekennzeichnet ist, dass dieser zumindest einen in einem Ladesteckergehäuse angeordneten und oben beschriebenen Leistungskontakt aufweist, wobei der zweite Anschlussbereich des Leistungskontakts mit einer Ladeleitung galvanisch verbunden ist, und wobei der erste Anschlussbereich des Leistungskontakts über eine Kontaktseite des Ladesteckergehäuses zugänglich ist. Weitere Vorteile, Einzelheiten und Merkmale der Erfindung ergeben sich nachfolgend aus den erläuterten Ausführungsbeispielen. Dabei zeigen im Einzelnen:
- Figur 1:: eine perspektivische Darstellung eines erfindungsgemäßen Ladesteckers von schräg vorne betrachtet;
- Figur 2:: den in Figur 1 dargestellten Ladestecker von schräg hinten betrachtet;
- Figur 3A:: einen erfindungsgemäßen Leistungskontakt in perspektivischer Darstellung;
- Figur 3B:: eine Querschnittsdarstellung des in Figur 3A gezeigten Leistungskontakts;
- Figur 4A:: eine perspektivische Darstellung eines Kontaktierungsbauteils eines nicht erfindungsgemäßen Leistungskontakts;
- Figur 4B:: eine Seitenansicht des in Figur 4A gezeigten Kontaktierungsbauteils;
- Figur 4C:: eine Querschnittsdarstellung des in Figur 4B gezeigten Kontaktierungsbauteils;
- Figur 5A:: eine Frontansicht eines frontseitigen Bereichs des in den Figuren 1 und 2 gezeigten Ladesteckers;
- Figur 5B:: eine Schnittdarstellung des in Figur 5A gezeigten frontseitigen Bereichs des Ladesteckers;
- Figur 6A:: den in Figur 5A gezeigten frontseitigen Bereich des Ladesteckers mit demontiertem Kontaktierungsbauteil;
- Figur 6B:: eine Schnittdarstellung des in Figur 6A gezeigten frontseitigen Bereichs des Ladesteckers;
- Figur 7A:: eine Rückansicht des in den Figuren 5A bis 6B gezeigten frontseitigen Bereichs des Ladesteckers; und
- Figur 7B:: eine Seitenansicht des in Figur 7A gezeigten frontseitigen Bereichs des Ladesteckers.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in anderen Ausführungsformen verwendbar.

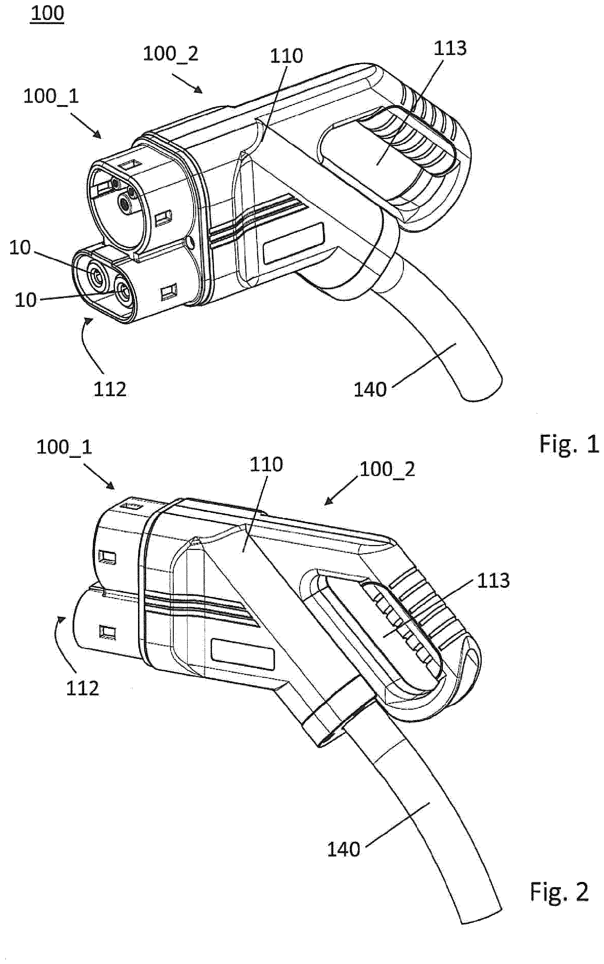

In den Figuren 1 und 2 ist ein erfindungsgemäßer Ladestecker 100 zur Kopplung mit einer korrespondierenden und in den Figuren nicht dargestellten Verbindungsvorrichtung und zur Übertragung elektrischer Energie dargestellt. Bei dem dargestellten Ladestecker 100 handelt es sich um einen Ladestecker 100 für das sogenannte Combined AC/DC-Charging System, das ein Ladesteckersystem für Elektrofahrzeuge nach IEC 62196 ist, und ein AC-Laden (Wechselstrom) und ein DC-Laden (Gleichstrom) unterstützt. Das Combined AC/DC-Charging System besteht im Wesentlichen aus einer fahrzeugseitigen Buchse, dem sogenannten Inlet, und dem Ladestecker 100.

Wie aus den Figuren 1 und 2 ersichtlich ist, weist der Ladestecker 100 ein Ladesteckergehäuse 110 auf, in dem ein Haltegriff 113 zur Handhabe des Ladesteckers 100 ausgebildet ist. Endseitig ist der Ladestecker 100 mit einem Ladekabel 140 verbunden, das auch als Versorgungskabel 140 bezeichnet werden kann, mittels dem der Ladestecker 100 mit einer nicht dargestellten Ladestation verbunden bzw. verbindbar ist. Eine frontseitige Kontaktseite 112 des Ladesteckers 100 ist in eine nicht dargestellte Ladebuchse, beispielsweise eines elektrobetriebenen Kraftfahrzeugs einführbar. Der Ladestecker 100 weist einen frontseitigen Bereich 100_1 und einen rückseitigen Bereich 100_2 auf. Wie aus Figur 1 ersichtlich ist, sind zwei Leistungskontakte 10 über die Kontaktseite 112 des Ladesteckers 100 zugänglich.

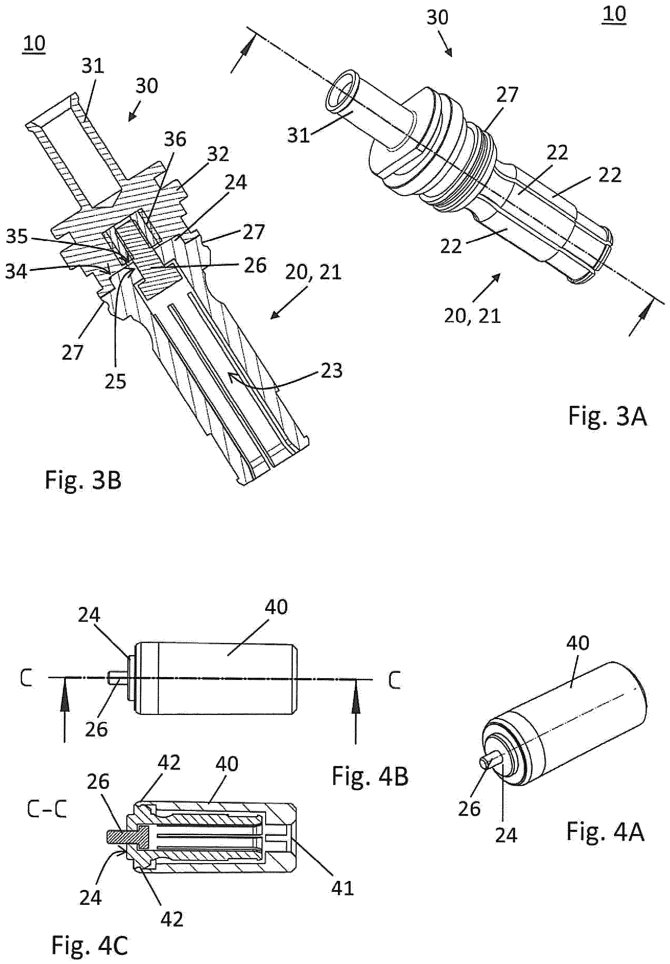

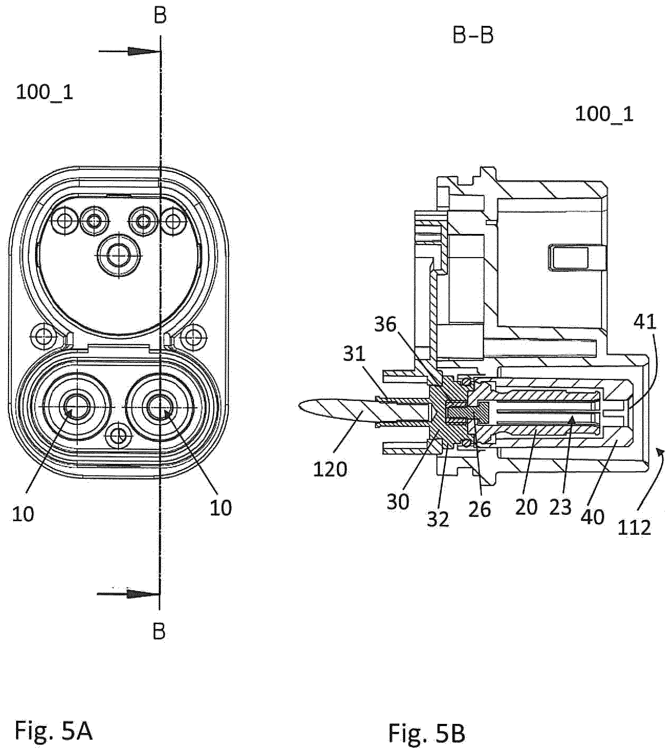

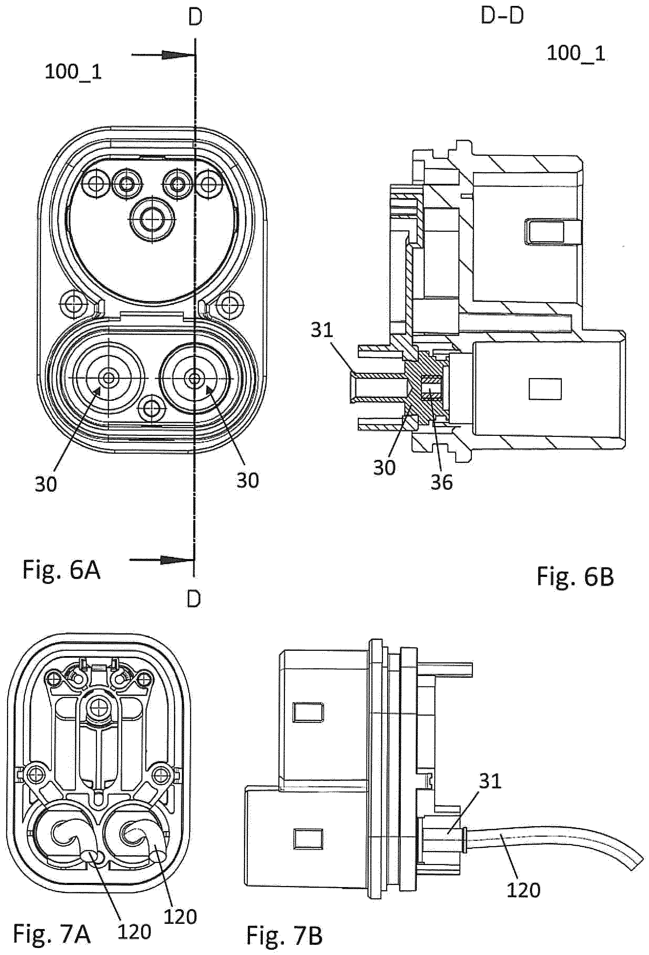

In den Figuren 3A und 3B ist ein erfindungsgemäßer Leistungskontakt 10 dargestellt. Dabei ist in Figur 3A der Leistungskontakt 10 perspektivisch dargestellt, und in Figur 3B ist der Leistungskontakt 10 im Schnitt dargestellt. Der erfindungsgemäße Leistungskontakt 10 weist einen ersten Anschlussbereich 21 zur galvanischen Verbindung mit einem elektrischen Energieempfänger und einen zweiten Anschlussbereich 31 zur galvanischen Verbindung mit einer Ladeleitung 120 (siehe Figuren 5B, 7A, 7B) auf. Der erfindungsgemäße Leistungskontakt 10 ist zweiteilig ausgebildet und weist ein Basisbauteil 30 und ein mit dem Basisbauteil 30 verbindbares und in den Figuren 3A und 3B mit dem Basisbauteil verbundenes Kontaktierungsbauteil 20 auf. Das Kontaktierungsbauteil 20 ist dabei von dem Basisbauteil 30 lösbar ausgebildet, sodass das Kontaktierungsbauteil 20 des Leistungskontakts 10 austauschbar ist. Das Basisbauteil 30 weist eine als Befestigungsflansch 32 ausgebildete Befestigungseinrichtung 32 auf, mittels der das Basisbauteil 30 mit dem Ladesteckergehäuse 110 verbindbar ist.

Der erste Anschlussbereich 21 des Leistungskontakts ist dabei in dem Kontaktierungsbauteil 20 angeordnet, und der zweite Anschlussbereich 31 des Leistungskontakts 10 ist in dem Basisbauteil 30 angeordnet. Bei dem in den Figuren 3A und 3B dargestellten verbundenen Zustand des Kontaktierungsbauteils 20 mit dem Basisbauteil 30 stehen der erste Anschlussbereich 21 und der zweite Anschlussbereich 31 in galvanischem Kontakt. Hinsichtlich der Materialwahl des Kontaktierungsbauteils 20 und des Basisbauteils 30 bestehen keinerlei Einschränkungen, solange das Kontaktierungsbauteil 20 und das Basisbauteil 30 elektrisch leitend sind.

Die Verbindung des Kontaktierungsbauteils 20 mit dem Basisbauteil 30 erfolgt mittels einer als Schraube 26 ausgebildeten ersten Verbindungseinrichtung 26 und mittels einer ein Innengewinde aufweisenden als Gewindehülse 36 ausgebildeten zweiten Verbindungseinrichtung 36. Die Schraube 26 ist dabei innerhalb eines Aufnahmeraums 23 Kontaktierungsbauteils 20 angeordnet und durchragt eine Durchgangsöffnung 25 des Kontaktierungsbauteils 20. Durch Einschrauben der Schraube 26 in die Gewindehülse 36 wird eine zuverlässige Verbindung des Kontaktierungsbauteils 20 mit dem Basisbauteil 30 erreicht.

Aus den Figuren 3A und 3B ist ferner ersichtlich, dass das Basisbauteil 30 eine stirnseitige Vertiefung 34 und das Kontaktierungsbauteil 20 einen Vorsprung 24 aufweist. Bei dem dargestellten Ausführungsbeispiel ist die stirnseitige Vertiefung 34 als zylinderförmige Vertiefung 34 ausgebildet, und der Vorsprung 24 ist als zylinderförmiger Vorsprung 24 ausgebildet. Durch Einführen des Vorsprung 24 in die stirnseitige Vertiefung 34 des Kontaktierungsbauteils 20 wird eine formschlüssige Verbindung des Kontaktierungsbauteils 20 mit dem Basisbauteil 30 erreicht.

Das Kontaktierungsbauteil 20 ist segmentiert aufgebaut. Dazu weist das Kontaktierungsbauteil 20 eine Vielzahl von Längsausnehmungen auf, sodass das Kontaktierungsbauteil 20 eine der Anzahl der Längsausnehmungen entsprechende Anzahl von Mantelsegmenten 22 aufweist. In dem dargestellten Ausführungsbeispiel sind die Mantelsegment 22 als Zylindermantelsegmente 22 ausgebildet. Die radialen Abstände der Zylindermantelsegment 22 sind zueinander variabel, das heißt die einzelnen Zylindermantelsegmente 22 können unter Vergrößerung der Längsausnehmungen auseinander gedrückt werden, wenn beispielsweise das Kontaktierungsbauteil 20 bzw. der erste Anschlussbereich 21 auf einen in den Figuren nicht dargestellten und beispielsweise fahrzeugseitig bereitgestellten Kontaktstift aufgeschoben wird. Dadurch wird eine zuverlässige elektrische/galvanische Verbindung zwischen dem ersten Anschlussbereich 21 des Kontaktierungsbauteils 20 und dem Kontaktstift erreicht.

In dem dargestellten Ausführungsbeispiel ist der zweite Anschlussbereich 31 des Basisbauteils 30 als eine Kontaktierungshülse 31 ausgebildet, in deren Innenraum eine Ladeleitung 120 aufgenommen werden kann. Die Kontaktierung einer Ladeleitung 120 mit dem Basisbauteil 30 ist in Figur 5B dargestellt.

Aus den Figuren 4A, 4B und 4C ist ersichtlich, dass der Leistungskontakt 10 ferner eine Isolationshülse 40 aufweisen kann. Die Isolationshülse 40 besteht dabei aus einem dielektrischen Material - also aus einem elektrisch isolierenden Material. Zur Verbindung der Isolationshülse 40 mit dem Kontaktierungsbauteil 20 weist das Kontaktierungsbauteil 20 eine in dem dargestellten Ausführungsbeispiel umlaufende Nut 27 auf. Die Isolationshülse 40 weist eine in dem dargestellten Ausführungsbeispiel umlaufend ausgebildete Rastkontur 42 auf, die auch als Rastfeder 42 bezeichnet werden kann. Folglich ist die Isolationshülse 40 durch Eingreifen der Rastfeder 42 in die Nut 27 mit dem Kontaktierungsbauteil 20 verbindbar. Im verbundenen Zustand der Isolationshülse 40 mit dem Kontaktierungsbauteil 20 ist das Kontaktierungsbauteil 20 über eine Durchgangsöffnung 41 der Isolationshülse 40 weiterhin zugänglich.

In den Figuren 5A und 5B ist ein frontseitiger Bereich 100_1 dargestellt. Dabei ist das Kontaktierungsbauteil 20 mit dem Basisbauteil 30 verbunden, und das Kontaktierungsbauteil 20 ist über die Durchgangsöffnung 41 der Isolationshülse 40 zugänglich. Folglich kann über die Kontaktseite 112 des Ladesteckers 100 der Leistungskontakt 10 mit einem Energieempfänger galvanisch verbunden werden.

In den Figuren 6A und 6B ist der frontseitige Bereich 100_1 dargestellt, wobei das Kontaktierungsbauteil 20 aus dem Ladestecker 100 entfernt ist. In diesem Zustand kann der Ladestecker 100 mit einem neuen Kontaktierungsbauteil 20 versehen werden. In Figur 7A einer ist der frontseitige Bereich 100 1 von einer Rückseite aus betrachtet dargestellt, und in Figur 7B ist der frontseitige Bereich 100 1 in einer Seitenansicht dargestellt.

### Bezugszeichenliste

- 10: Leistungskontakt
- 20: Kontaktierungsbauteil (des Leistungskontakts)
- 21: erster Anschlussbereich / Kontaktbuchse (des Leistungskontakts)
- 22: Mantelsegment / Zylindermantelsegment (des Kontaktierungsbauteils)
- 23: Aufnahmeraum (des Kontaktierungsbauteils)
- 24: (zylinderförmiger) Vorsprung (des Kontaktierungsbauteils)
- 25: Durchgangsöffnung (des Kontaktierungsbauteils)
- 26: erste Verbindungseinrichtung / Schraube
- 27: Nut (des Kontaktierungsbauteils)
- 30: Basisbauteil (des Leistungskontakts)
- 31: zweiter Anschlussbereich (des Leistungskontakts)
- 32: Befestigungseinrichtung / Befestigungsflansch (des Basisbauteils)
- 34: (zylinderförmige) stirnseitige Vertiefung (des Basisbauteils)
- 35: Durchgangsöffnung (des Basisbauteils)
- 36: zweite Verbindungseinrichtung / Gewindehülse (des Basisbauteils)
- 40: Isolationshülse
- 41: Durchgangsöffnung (der Isolationsöffnung)
- 42: Rastkontur / Rastfeder (der Isolationshülse)
- 100: Ladestecker / Steckverbinder
- 100_1: frontseitiger Bereich (des Ladesteckers)
- 100_2: rückseitiger Bereich (des Ladesteckers)
- 110: Ladesteckergehäuse
- 112: Kontaktseite (des Ladesteckergehäuses)
- 113: Haltegriff (des Ladesteckergehäuses)
- 120: Ladeleitung (des Ladesteckers)
- 140: Ladekabel / Versorgungskabel

## Patentansprüche

1. Leistungskontakt (10) für einen Ladestecker (100) und/oder für eine Ladebuchse, wobei der Leistungskontakt (10) einen ersten Anschlussbereich (21) zur galvanischen Verbindung mit einem elektrischen Energieempfänger oder Energiesender und einem zweiten Anschlussbereich (31) zur galvanischen Verbindung mit einer Ladeleitung (120) aufweist, wobei der Leistungskontakt (10) durch folgende Merkmale aufweist:
- der Leistungskontakt (10) ist zweiteilig ausgebildet und weist ein Basisbauteil (30) und mit dem Basisbauteil (30) verbindbares Kontaktierungsbauteil (20) auf, wobei das Kontaktierungsbauteil (20) von dem Basisbauteil (30) lösbar ausgebildet ist, so dass das Kontaktierungsbauteil (20) des Leistungskontakts (10) austauschbar ist;
- der erste Anschlussbereich (21) ist in dem Kontaktierungsbauteil (20) angeordnet und der zweite Anschlussbereich (31) ist in dem Basisbauteil (30) angeordnet;
- bei Verbindung des Kontaktierungsbauteils (20) mit dem Basisbauteil (30) stehen der erste Anschlussbereich (21) und der zweite Anschlussbereich (31) in galvanischem Kontakt; und
- das Kontaktierungsbauteil (20) weist eine erste Verbindungseinrichtung (26) und das Basisbauteil (30) weist eine zweite Verbindungseinrichtung (36) auf, so dass das Kontaktierungsbauteil (20) mit dem Basisbauteil (30) mittels der ersten Verbindungseinrichtung (26) und mittels der zweiten Verbindungs-einrichtung (36) verbindbar ist,
wobei die erste Verbindungseinrichtung (26) als Schraube (26) oder als Gewindestift und die zweite Verbindungseinrichtung (36) als eine ein Innengewinde aufweisende Gewindehülse (36) ausgebildet sind, wobei die Schraube (26) oder der Gewindestift in die Gewindehülse (36) einschraubbar ist,
**dadurch gekennzeichnet, dass**
die Gewindehülse (36) von Basisbauteil (30) stofflich getrennt ist.

2. Leistungskontakt (10) nach Anspruch 1, **dadurch gekennzeichnet, dass** die Schraube (26) oder der Gewindestift innerhalb eines Aufnahmeraums (23) des Kontaktierungsbauteils (20) angeordnet ist und durch eine Durchgangsöffnung (25) des Kontaktierungsbauteils (20) hindurchragt.

3. Leistungskontakt (10) nach einem der vorhergehenden Ansprüchen, **dadurch gekennzeichnet, dass** das Kontaktierungsbauteil (20) als Kontaktbuchse (20) ausgebildet ist.

4. Leistungskontakt (10) nach einem der vorhergehenden Ansprüche, **gekennzeichnet durch** die folgenden Merkmale:
- der Leistungskontakt (10) weist eine Isolationshülse (40) mit einer stirnseitigen Durchgangsöffnung (41) auf, die mit dem Kontaktierungsbauteil (20) verbindbar ist; und
- bei Verbindung der Isolationshülse (40) mit dem Kontaktierungsbauteil (20) ist das Kontaktierungsbauteil (20) von der Isolationshülse (40) umschlossen und über die Durchgangsöffnung (41) der Isolationshülse (40) zugänglich.

5. Leistungskontakt (10) nach Anspruch 4, **dadurch gekennzeichnet, dass** das Kontaktierungsbauteil (20) eine zumindest teilweise umlaufende Nut (27) oder eine zumindest teilweise umlaufende Erhebung und die Isolationshülse (40) eine zumindest teilweise umlaufende Rastkontur (42) aufweisen, so dass die Isolationshülse (40) durch Eingreifen der Rastkontur (42) in die Nut (27) oder Eingreifen in die Erhebung oder Hintergreifen der Erhebung mit dem Kontaktierungsbauteil (20) verbindbar ist.

6. Leistungskontakt (10) nach einem der vorhergehenden Ansprüchen, **gekennzeichnet durch** die folgenden Merkmale:
- das Basisbauteil (30) weist eine stirnseitige Vertiefung (34) und das Kontaktierungsbauteil (20) weist einen in die Vertiefung (34) einführbaren Vorsprung (24) auf; und
- bei Verbindung des Kontaktierungsbauteils (20) mit dem Basisbauteil (30) ist das Kontaktierungsbauteil (20) mit dem Basisbauteil (30) formschlüssig verbunden, indem der Vorsprung (24) innerhalb der Vertiefung (34) angeordnet ist.

7. Leistungskontakt (10) nach einem der Ansprüche 1 bis 5, **gekennzeichnet durch** die folgenden Merkmale:
- das Kontaktierungsbauteil (34) weist eine stirnseitige Vertiefung und das Basisbauteil (20) weist einen in die Vertiefung einführbaren Vorsprung auf; und
- bei Verbindung des Kontaktierungsbauteils (20) mit dem Basisbauteil (30) ist das Kontaktierungsbauteil (20) mit dem Basisbauteil (30) formschlüssig verbunden, indem der Vorsprung innerhalb der Vertiefung angeordnet ist.

8. Ladestecker (100) zur Kopplung mit einer korrespondierenden Verbindungsvorrichtung und zur Übertragung elektrischer Energie, **dadurch gekennzeichnet, dass** der Ladestecker (100) zumindest ein in einem Ladesteckergehäuse (110) angeordneten Leistungskontakt (10) nach einem der vorhergehenden Ansprüche aufweist, wobei der zweite Anschlussbereich (31) des Leistungskontakts (10) mit einer Ladeleitung (120) galvanisch verbunden ist, und wobei der erste Anschlussbereich (21) des Leistungskontakts (10) über eine Kontaktseite (112) des Ladesteckergehäuses (110) zugänglich ist.

## Claims

1. A power contact (10) for a charging plug (100) and/or for a charging socket, wherein the power contact (10) has a first connection region (21) for galvanic connection to an electrical energy receiver or energy transmitter and a second connection region (31) for galvanic connection to a charging line (120), wherein the power contact (10) comprises the following features:
- the power contact (10) is of two-part form and has a base component (30) and contact-making component (20) that can be connected to the base component (30), wherein the contact-making component (20) is formed so as to be releasable from the base component (30) so that the contact-making component (20) of the power contact (10) can be exchanged;
- the first connection region (21) is arranged in the contact-making component (20) and the second connection region (31) is arranged in the base component (30);
- when the contact-making component (20) is connected to the base component (30), the first connection region (21) and the second connection region (31) are in galvanic contact; and
- the contact-making component (20) has a first connecting device (26) and the base component (30) has a second connecting device (36) so that the contact making component (20) can be connected to the base component (30) by means of the first connecting device (26) and by means of the second connecting device (36),
wherein the first connecting device (26) is formed as a screw (26) or as a threaded pin and the second connecting device (36) is formed as a threaded sleeve (36) having an internal thread, wherein the screw (26) or the threaded pin can be screwed into the threaded sleeve (36), **characterized in that** the threaded sleeve (36) is materially separated from the base component (30).

2. The power contact (10) as claimed in claim 1, **characterized in that** the screw (26) or the threaded pin is arranged inside a holding space (23) of the contact-making component (20) and protrudes through a passage opening (25) of the contact-making component (20).

3. The power contact (10) as claimed in one of the preceding claims, **characterized in that** the contact-making component (20) is formed as a contact socket (20).

4. The power contact (10) as claimed in one of the preceding claims, **characterized by** the following features:
- the power contact (10) has an insulation sleeve (40) having a front-side passage opening (41), which can be connected to the contact-making component (20); and
- when the insulation sleeve (40) is connected to the contact-making component (20), the contact-making component (20) is enclosed by the insulation sleeve (40) and accessible via the passage opening (41) of the insulation sleeve (40).

5. The power contact (10) as claimed in claim 4, **characterized in that** the contact-making component (20) has an at least partly circumferential groove (27) or an at least partly circumferential elevation and the insulation sleeve (40) has an at least partly circumferential latching contour (42) so that the insulation sleeve (40) can be connected to the contact-making component (20) through engagement of the latching contour (42) into the groove (27) or engagement into the elevation or engagement behind the elevation.

6. The power contact (10) as claimed in one of the preceding claims, **characterized by** the following features:
- the base component (30) has a front-side depression (34) and the contact-making component (20) has a projection (24) that can be inserted into the depression (34); and
- when the contact-making component (20) is connected to the base component (30), the contact-making component (20) is connected to the base component (30) in a form-fitting manner by virtue of the projection (24) being arranged inside the depression (34).

7. The power contact (10) as claimed in one of claims 1 to 5, **characterized by** the following features:
- the contact-making component (34) has a front-side depression and the base component (20) has a projection that can be inserted into the depression; and
- when the contact-making component (20) is connected to the base component (30), the contact-making component (20) is connected to the base component (30) in a form-fitting manner by virtue of the projection being arranged inside the depression.

8. A charging plug (100) for coupling to a corresponding connecting apparatus and for transmitting electrical energy, **characterized in that** the charging plug (100) has at least one power contact (10) as claimed in one of the preceding claims, which is arranged in a charging plug housing (110), wherein the second connection region (31) of the power contact (10) is galvanically connected to a charging line (120), and wherein the first connection region (21) of the power contact (10) is accessible via a contact side (112) of the charging plug housing (110).

## Revendications

1. Contact de puissance (10) pour fiche de charge (100) et/ou pour prise de charge, le contact de puissance (10) présentant une première zone de connexion (21) permettant une liaison galvanique à un récepteur d'énergie électrique ou à un émetteur d'énergie électrique et une seconde zone de connexion (31) permettant une liaison galvanique à une ligne de charge (120), le contact de puissance (10) présentant les caractéristiques suivantes :
- le contact de puissance (10) est conçu en deux parties et présente un composant de base (30) et un composant de mise en contact (20) pouvant être relié au composant de base (30), le composant de mise en contact (20) étant amovible du composant de base (30), de sorte que le composant de mise en contact (20) du contact de puissance (10) peut être remplacé ;
- la première zone de connexion (21) est ménagée dans le composant de mise en contact (20) et la seconde zone de connexion (31) est ménagée dans le composant de base (30) ;
- lorsque le composant de mise en contact (20) est relié au composant de base (30), la première zone de connexion (21) et la seconde zone de connexion (31) sont en contact galvanique ; et
- le composant de mise en contact (20) présente un premier moyen de liaison (26) et le composant de base (30) présente un second moyen de liaison (36), de sorte que le composant de mise en contact (20) peut être relié au composant de base (30) au moyen du premier moyen de liaison (26) et au moyen du second moyen de liaison (36),
dans lequel
le premier moyen de liaison (26) est conçu comme une vis (26) ou comme une tige filetée et le second moyen de liaison (36) est conçu comme un manchon fileté (36) présentant un filetage intérieur, la vis (26) ou la tige filetée pouvant être vissée dans le manchon fileté (36),
**caractérisé en ce que**
le manchon fileté (36) est séparé matériellement du composant de base (30).

2. Contact de puissance (10) selon la revendication 1, **caractérisé en ce que** la vis (26) ou la tige filetée est montée à l'intérieur d'un espace de réception (23) du composant de mise en contact (20) et fait saillie à travers une ouverture de passage (25) du composant de mise en contact (20).

3. Contact de puissance (10) selon l'une des revendications précédentes, **caractérisé en ce que** le composant de mise en contact (20) est réalisé sous la forme d'une douille de contact (20).

4. Contact de puissance (10) selon l'une des revendications précédentes, **caractérisé par** les caractéristiques suivantes :
- le contact de puissance (10) présente un manchon d'isolation (40) comportant une ouverture de passage (41) côté frontal et pouvant être relié au composant de mise en contact (20) ; et,
- lorsque le manchon d'isolation (40) est relié au composant de mise en contact (20), le composant de mise en contact (20) est entouré par le manchon d'isolation (40) et est accessible par l'ouverture de passage (41) du manchon d'isolation (40).

5. Contact de puissance (10) selon la revendication 4, **caractérisé en ce que** le composant de mise en contact (20) présente une rainure (27) au moins partiellement circonférentielle ou une surélévation au moins partiellement circonférentielle, et le manchon d'isolation (40) présente un contour d'encliquetage (42) au moins partiellement circonférentiel, de sorte que le manchon d'isolation (40) peut être relié au composant de mise en contact (20) par la mise en prise du contour d'encliquetage (42) avec la rainure (27) ou la mise en prise avec la surélévation, ou la mise en prise arrière de la surélévation.

6. Contact de puissance (10) selon l'une des revendications précédentes, **caractérisé par** les caractéristiques suivantes :
- le composant de base (30) présente un évidement (34) côté frontal et le composant de mise en contact (20) présente une saillie (24) qui peut être insérée dans l'évidement (34) ; et
- lorsque le composant de mise en contact (20) est relié au composant de base (30), le composant de mise en contact (20) est relié au composant de base (30) par complémentarité de forme par disposition de la saillie (24) à l'intérieur de l'évidement (34).

7. Contact de puissance (10) selon l'une des revendications 1 à 5, **caractérisé par** les caractéristiques suivantes :
- le composant de mise en contact (34) présente un évidement côté frontal et le composant de base (20) présente une saillie qui peut être insérée dans l'évidement; et
- lorsque le composant de mise en contact (20) est relié au composant de base (30), le composant de mise en contact (20) est relié au composant de base (30) par complémentarité de forme par disposition de la saillie à l'intérieur de l'évidement.

8. Fiche de charge (100) destinée à être couplée avec un appareil de liaison correspondant et pour la transmission d'énergie électrique, **caractérisée en ce que** la fiche de charge (100) présente au moins un contact de puissance (10) disposé dans un boîtier de fiche de charge (110) selon l'une des revendications précédentes, la seconde zone de connexion (31) du contact de puissance (10) étant reliée électriquement à une ligne de charge (120), et la première zone de connexion (21) du contact de puissance (10) étant accessible par un côté de contact (112) du boîtier de fiche de charge (110).
